# EUROPEAN PATENT APPLICATION

(11) **EP 4 641 650 A1**
(43) Date of publication of application: **29.10.2025**
(21) Application number: 25166471.0
(22) Date of filing: 26.03.2025
(51) Int. Cl.: H01M 4/04, B05C 5/02, B05C 9/06

(54) **DEVICE FOR COATING ELECTRODE TAB INSULATOR**

(30) Priority: 09.04.2024 KR 20240048175
(71) Applicant: SAMSUNG SDI CO., LTD., Yongin-si, Gyeonggi-do 17084 (KR)
(72) Inventor: LIM, Byung-Ho, 17084 Yongin-si (KR)
(74) Representative: Marks & Clerk LLP

(57) **Abstract**

A device for coating an electrode tab insulator includes: a top die having an inlet configured to receive an insulator; a bottom die on a lower side of the top die and coupled to the top die; and a shim member having a thickness (t) between the top die and the bottom die and including an outlet connected to the inlet and establishing a passage in which the insulator flows in a width direction of the outlet.

## Description

### BACKGROUND

### 1. Field

The present disclosure relates to a device for coating an electrode tab insulator.

### 2. Description of the Related Art

Unlike a primary cell, a rechargeable battery is configured to repeatedly charge and discharge. A small rechargeable battery may be used for portable small electronic devices such as a mobile phone, a laptop computer, or a camcorder. A large-capacity and high-density rechargeable battery may be used to store motor driving power or energy of hybrid vehicles and electric vehicles.

The rechargeable battery includes an electrode assembly for charging and discharging currents, a case or a pouch for receiving the electrode assembly and an electrolyte solution, and an electrode terminal connected to the electrode assembly and drawn outside the case or the pouch. The electrode assembly may be formed with a jellyroll type formed by winding an electrode and a separator or a stack type formed by stacking the electrode and the separator.

For example, items for estimating safety of the rechargeable battery in a small pouch stack type include a heat exposure estimation. If the heat exposure estimation is performed, an upper separator may shrink and the positive electrode member tab and the negative electrode member tab may be short-circuited. The short-circuit may cause ignition.

### SUMMARY

The present disclosure relates to various embodiments of a device for coating an electrode tab insulator for reinforcing insulation performance of an electrode member tab. The device for coating electrode tab insulator is configured to achieve insulation safety by uniformly (or substantially uniformly) coating an insulator on an electrode member tab.

In one embodiment, a device for coating an electrode tab insulator includes a top die having an inlet to receive an insulator; a bottom die on a lower side of the top die and coupled to the top die; and a shim member having a thickness (t) between the top die and the bottom die to establish an outlet connected to the inlet and a passage in which the insulator is configured to flow in a width direction of the outlet.

In other words, in one embodiment, there is provided a device for coating an electrode tab insulator, the device comprising: a top die comprising an inlet configured to receive an insulator; a bottom die on a lower side of the top die, the bottom die being coupled to the top die; and a shim member having a thickness (t) between the top die and the bottom die, the shim member comprising an outlet connected to the inlet and forming a passage in which the insulator is configured to flow in a width direction of the outlet.

A width, a height, and a length of the passage may establish or form a volume in which the insulator flows.

The shim member may establish or form a width (W) of the outlet.

The passage may include a first via portion connected to the inlet and established as an eleventh side with an eleventh angle θ11 and a twelfth side with a twelfth angle θ12 that is greater than the eleventh angle θ11 with respect to the width direction, a second via portion connected to the first via portion and established to cross the width direction, and a third via portion connected to the second via portion, established as a twenty-first side with a twenty-first angle θ21 and a twenty-second side with a twenty-second angle θ22 that is greater than the twenty-first angle θ21 with respect to the width direction, and connected to the outlet.

In other words, the passage may comprise a first via portion connected to the inlet, the first via portion comprising an eleventh side oriented at an eleventh angle θ11 and a twelfth side oriented at a twelfth angle θ12 that is greater than the eleventh angle θ11 with respect to the width direction, a second via portion connected to the first via portion, and a third via portion connected to the second via portion and to the outlet, the third via portion comprising a twenty-first side oriented a twenty-first angle θ21 and a twenty-second side oriented a twenty-second angle θ22 that is greater than the twenty-first angle θ21 with respect to the width direction.

The eleventh angle θ11 may be less than the twenty-first angle θ21, and the twelfth angle θ12 may be less than the twenty-second angle θ22.

The third via portion may further include a taper portion on the twenty-second side facing the twenty-first side in the width direction, the twenty-first side may extend to the outlet with the twenty-first angle θ21, the twenty-second side may extend with the twenty-second angle, and the taper portion may extend with a third angle θ3 to approach the twenty-first side.

A thickness of the taper portion on the twenty-second side may be substantially equal to a thickness of an entire region of the third via portion.

A thickness of the taper portion on the twenty-second side may be less than a thickness of another portion of the third via portion.

The taper portion on the twenty-second side may include a chamfer on one side in a thickness direction.

The twenty-first side may include a chamfer on one side in the thickness direction.

The passage may include a first via portion connected to the inlet, established with a first angle θ1 along a centerline with respect to the width direction, and of which a width is gradually reduced, a second via portion connected to the first via portion, established to cross the width direction along a centerline, and having a predetermined width, and a third via portion connected to the second via portion, established at a second angle θ2 that is greater than the first angle θ1 along a centerline with respect to the width direction, and connected to the outlet.

In other words, the passage may comprise: a first via portion connected to the inlet, the first via portion being oriented at a first angle θ1 along a centerline with respect to the width direction, the first via portion having a width that is gradually reduced, a second via portion connected to the first via portion, the second via portion having a predetermined width, and a third via portion connected to the second via portion and to the outlet, the third via portion being oriented at a second angle θ2 along a centerline with respect to the width direction.

The first angle θ1 may be less than the second angle θ2.

The passage may include a first via portion of which a width is reduced, proceeding to the outlet from the inlet in an inclined way, a second via portion connected to the first via portion, proceeding to the outlet in an orthogonal way, and of which the width is identical, and a third via portion connected to the second via portion, and of which the width is reduced while proceeding to the outlet in an inclined way.

In other words, the passage may comprise: a first via portion extending from the inlet toward the outlet in an inclined manner, wherein a width of the first via portion reduces in a direction toward the outlet, a second via portion connected to the first via portion, the second via portion extending toward the outlet in an orthogonal manner, a width of the second via portion being substantially constant, and a third via portion connected to the second via portion, the third via portion extending to the outlet in an inclined manner, wherein a width of the third via portion reduces in a direction toward the outlet.

The third via portion may further include a taper portion extending to the outlet and a width of the third via portion may decrease or be reduced.

The third via portion may include a chamfer on one side in the thickness direction on the taper portion on the second side to further increase the width of the outlet.

In other words, the third via portion may comprise a chamfer on one side in a thickness direction on the taper portion on a second side, the chamfer increasing the width of the outlet.

The third via portion may include a chamfer on one side of the first side in the thickness direction and further increases the width of the outlet.

In other words, the third via portion may comprise a chamfer on one side of a first side in the thickness direction, the chamfer increasing the width of the outlet.

According to the embodiment, the shim member may be between the top die and the bottom die to establish the outlet to allow the insulator to flow in the width direction of the outlet, and to coat the insulator on the electrode member tab, thereby increasing the insulation performance of the electrode tab.

Further, the first, second, and third via portions may be provided in the width direction of the outlet, and the taper portion may be provided on the third via portion, thereby uniformly (or substantially uniformly) coating the insulator on the electrode member tab. Therefore, insulation safety of the electrode member tab may be achieved.

At least some of the above and other features of the invention are set out in the claims.

### BRIEF DESCRIPTION OF THE DRAWINGS

FIG. 1 shows a side view of a device for coating an electrode tab insulator according to a first embodiment.
FIG. 2 shows an exploded perspective view of FIG. 1.
FIG. 3 shows a top plan view of a shim member of FIG. 1 and FIG. 2.
FIG. 4 shows a partial perspective view of the shim member.
FIG. 5 shows a top plan view of FIG. 4.
FIG. 6 shows a flow state of an insulator on the shim member of FIG. 5.
FIG. 7 shows a partial perspective view an insulator on an electrode member tab formed utilizing the device for coating electrode tab insulator according to a first embodiment.
FIG. 8 shows an actual image of an insulating portion of FIG. 7.
FIG. 9 shows a cross-sectional image with respect to a line IX-IX of FIG. 8.
FIG. 10 shows a cross-sectional image with respect to a line X-X of FIG. 8.
FIG. 11 shows a partial perspective view of a shim member applied to a device for coating electrode tab insulator according to a second embodiment.
FIG. 12 shows a partial perspective view of a flow state of an insulator in the shim member of FIG. 11.

### DETAILED DESCRIPTION

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive, and like reference numerals designate like elements throughout the specification.

Although first, second, etc. are used to describe various components, the components may not be limited by these terms. These terms are only used to distinguish one component from another.

It is to be understood that when one component is referred to as being "connected" or "coupled" to another component, it may be connected or coupled directly to another component or be connected or coupled to another component with the other component intervening therebetween. On the other hand, it is to be understood that when one component is referred to as being "connected or coupled directly" to another component, it may be connected or coupled to another component without the other component intervening therebetween.

It will be further understood that terms "comprises" or "have" used in the present specification specify the presence of stated features, numerals, steps, operations, components, parts, or a combination thereof, but do not preclude the presence or addition of one or more other features, numerals, steps, operations, components, parts, or a combination thereof. Unless explicitly described to the contrary, the word "comprise" and variations such as "comprises" or "comprising" will be understood to imply the inclusion of stated elements but not the exclusion of any other elements.

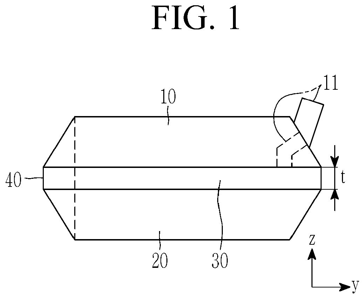

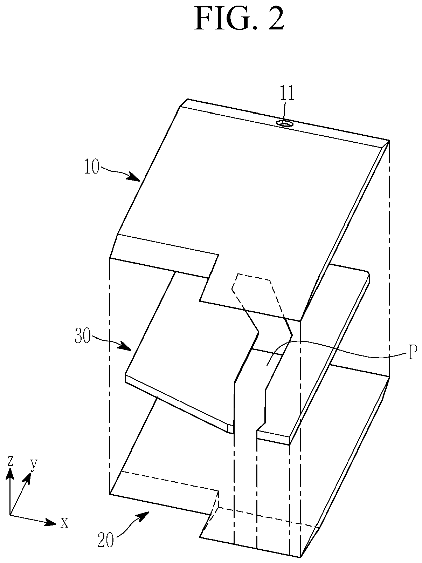

FIG. 1 shows a side view of a device for coating an electrode tab insulator according to a first embodiment of the present disclosure, and FIG. 2 shows an exploded perspective view of the device of FIG. 1. Referring to FIG. 1 and FIG. 2, the device for coating an electrode tab insulator may include a top die 10, a bottom die 20, and a shim member 30.

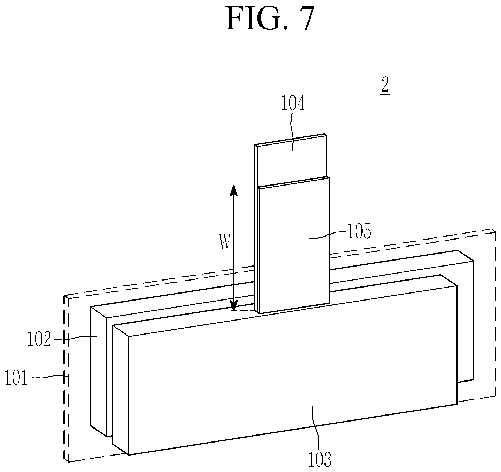

The top die 10 may have an inlet 11 on one upper side to form an upper portion of the coating device and to input (receive) an insulator that is a coating material. In one or more embodiments, the insulator may be made of a polyimide (PI). The PI may be configured to reinforce the insulation of the positive electrode member tab 104 on the upper portion of the electrode assembly 2 (see FIG. 7), thereby increasing the safety of the electrode assembly 2 by preventing (or at least mitigating) a short-circuit between the positive and negative electrode tabs.

The bottom die 20 may be on a lower side of the top die 10, may be combined with the top die 10, and may form a lower portion of the device for coating the electrode tab insulator. In one or more embodiments, a combined structure of the top die 10 and the bottom die 20 may be fastened by a bolt or other fastener, which will not be described.

The shim member 30 may be a thin plate with a thickness (t). The shim member 30 may be between the top die 10 and the bottom die 20. The shim member 30 may include an outlet 40 and may connect the outlet 40 and the inlet 11 to establish a passage P through which the insulator flows. In one or more embodiments, a lateral surface of the passage P may be established by the shim member 30, and an upper surface and a lower surface of the passage P may be established by the top die 10 and the bottom die 20.

A width, height, and length of the passage P may establish a via volume through which the insulator passes. The height of the passage P may be established as the thickness (t) of the shim member 30 between the top die 10 and the bottom die 20.

The width, height, and length of the passage P may establish the outlet 40 that is configured to flow the insulator and uniformly (or substantially uniformly) coat the insulator. The coated insulator may secure the insulation safety on the positive electrode member tab 104.

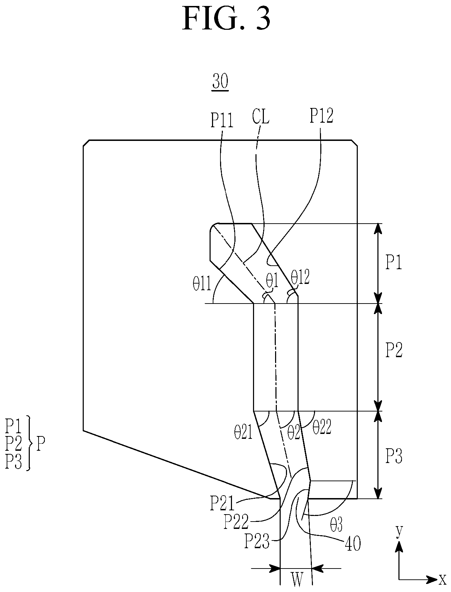

FIG. 3 shows a top plan view of the shim member 30 of FIG. 1 and FIG. 2, and FIG. 4 shows a partial perspective view of the shim member 30. Referring to FIG. 2 to FIG. 4, the shim member 30 may establish the width (W) of the outlet 40. The outlet 40 may be at an end of the passage P and may establish the coating width of the insulator.

In one or more embodiments, the passage P may include a first via portion P1, a second via portion P2, and a third via portion P3 continuously extending to the outlet 40 from the inlet 11. The first via portion P1 may be connected to the inlet 11 and may be oriented a first angle θ1 with respect to a centerline CL in a width direction (x-axis direction), and its width may be gradually reduced (i.e., taper) with a distance from the inlet 11.

The second via portion P2 may be connected to the first via portion P1, may have a width in the width direction (x-axis direction) and centered (or substantially centered) along the centerline CL, and may have a constant width (or a substantially constant width) in accordance with a distance from the first via portion P1. The second via portion P2 may extend in the direction crossing the width direction (e.g., the y-axis direction).

The third via portion P3 may be connected to the second via portion P2, may be oriented at a second angle θ2 that is greater than the first angle θ1 with respect to the width direction (x-axis direction) along the centerline CL, and may be connected to the outlet 40. The width of the third via portion P3 may be gradually reduced with a distance from the second via portion P2 (i.e., taper toward the outlet 40).

The first angle θ1 of the first via portion P1 may be less than the second angle θ2 of the third via portion P3. The first via portion P1 may be relatively gently slanted in the width direction (x-axis direction), and the third via portion P3 may be relatively steeply slanted in the width direction (x-axis direction). Therefore, a distance that the third via portion P3 extends in the width direction (x-axis direction) may be less than a distance that the first via portion P1 extends in the width direction (x-axis direction).

When the first and third via portions P1 and P3 are compared, the first via portion P1 may relatively greatly move the insulator in the x-axis direction, and the third via portion P3 may relatively shortly move the insulator in the x-axis direction.

Regarding the passage P, the first via portion P1 may be inclined with respect to the outlet 40 from the inlet 11 and the width may be reduced. The insulator passing by the first via portion P1 may have a uniform (or substantially uniform) distribution in the width direction (x-axis direction).

The second via portion P2 may be connected to the first via portion P1 and may extend vertically toward the outlet 40, and the width may be constant (or substantially constant). The insulator passing by the second via portion P2 may not move in the width direction (x-axis direction) and may move in the direction (y-axis direction) crossing the width direction (x-axis direction) so it may have a uniform (or substantially uniform) distribution in the width direction (x-axis direction) of the outlet 40.

The third via portion P3 may be connected to the second via portion P2 and may extend to the outlet 40 in an inclined way, and the width of the third via portion P3 may be reduced toward the outlet 40. Therefore, the insulator passing by the third via portion P3 may form a uniform (or substantially uniform) distribution in the width direction (x-axis direction).

The first via portion P1 may be relatively gently inclined in the width direction (x-axis direction), and the third via portion P3 may be relatively steeply inclined in the width direction (x-axis direction) so the distance that the first via portion P1 moves in the width direction (x-axis direction) is shorter than the distance that the third via portion P3 moves in the width direction (x-axis direction). Therefore, the insulator passing by the first, second, and third via portions P1, P2, and P3 may have a more uniform distribution in the width direction.

Regarding the passage P, the first via portion P1 may be connected to the inlet 11, and may include an eleventh side P11 oriented at an eleventh angle θ11 and a twelfth side P12 oriented at a twelfth angle θ12 that is greater than the eleventh angle θ11 with respect to the width direction (x-axis direction). Regarding the first via portion P1, the centerline CL may be oriented at the first angle θ1, the eleventh side P11 may be oriented at the eleventh angle θ11, and the twelfth side P12 may be oriented at the twelfth angle θ12. Therefore, the width of the first via portion P1 may be reduced (i.e., tapered) in in a direction toward the outlet 40.

The second via portion P2 may be connected to the first via portion P1. The second via portion P2 may have a predetermined width in the width direction (x-axis direction). The second via portion P2 may be configured to move the insulator in the direction that is orthogonal to the outlet 40 and may be configured to make the insulator uniform (or substantially uniform) in the width direction (x-axis direction).

The third via portion P3 may be connected to the second via portion P2, and may include a twenty-first side P21 oriented at a twenty-first angle θ21 and a twenty-second side P22 oriented at a twenty-second angle θ22 that is greater than the twenty-first angle θ21 with respect to the width direction (x-axis direction). Regarding the third via portion P3, the centerline CL may be oriented at the second angle θ2, the twenty-first side P21 may be oriented at the twenty-first angle θ21, and the second side P22 may be oriented at the twenty-second angle θ22. Therefore, the width of the third via portion P3 may be reduced (i.e., tapered) in a direction toward the outlet 40.

The eleventh angle θ11 of the eleventh side P11 in the first via portion P1 may be less than the twenty-first angle θ21 of the twenty-first side P21 in the third via portion P3, and the twelfth angle θ12 of the twelfth side P12 in the first via portion P1 may be less than the twenty-second angle θ22 of the twenty-second side P2 in the third via portion P3.

The eleventh and twelfth angles θ11 and θ12 of the eleventh and twelfth sides P11 and P12, respectively, in the first via portion P1 may be relatively gently inclined in the width direction (x-axis direction), and the twenty-first and twenty-second angles θ21 and θ22, respectively, of the twenty-first and twenty-second sides P21 and P22 in the third via portion P3 may be relatively steeply inclined in the width direction so the distance that the third via portion P3 extends in the width direction (x-axis direction) may be less than the distance that the first via portion P1 extends in the width direction (x-axis direction). Therefore, the insulator passing by the first, second, and third via portions P1, P2, and P3 may form a more uniform distribution with respect to the width direction (x-axis direction).

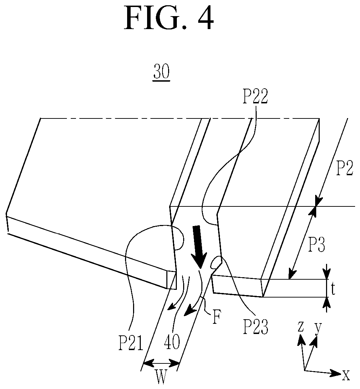

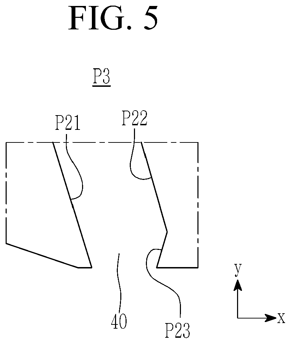

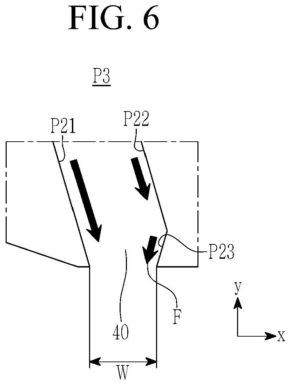

FIG. 5 shows a top plan view of the shim member 30 of FIG. 4, and FIG. 6 shows a flow state of an insulator on the shim member 30 of FIG. 5. Referring to FIG. 3 to FIG. 6, the third via portion P3 may further include a taper portion P23 on the twenty-second side P22 facing the twenty-first side P21 in the width direction (x-axis direction). The twenty-first side P21 may extend to the outlet 40 with the twenty-first angle θ21.

The twenty-second side P22 may extend with the twenty-second angle θ22 and may extend toward the outlet 40, and the taper portion P23 may extend with a third angle θ3 to gradually approach the twenty-first side P21 (i.e., the taper portion P23 extends toward the twenty-first side P21).

The taper portion P23 may extend to the outlet 40 from the twenty-second side P22 in a declined way and may reduce the width connected to the outlet 40 in the width direction (x-axis direction). Therefore, the taper portion P23 may slant the insulator in an opposite direction to the first via portion P1 and the twenty-first and twenty-second sides P21 and P22 in the width direction. The taper portion P23 may not widen the flow of the insulator in the width direction (x-axis direction) and may narrow the flow of the insulator in the width direction (x-axis direction).

Therefore, the taper portion P23 may reduce the width (W) at the outlet 40, thereby increasing a flow rate of the insulator, and forming a uniform (or substantially uniform) distribution. The flow rate (F) of the insulator passing by the third via portion P3 may increase due to the taper portion P23 in the width direction (x-axis direction), thereby forming a further uniform distribution.

The shim member 30 may have the same thickness (t) (or substantially the same thickness) at the first, second, and third via portions P1, P2, and P3. The twenty-first and twenty-second sides P21 and P22 of the third via portion P3 may have the same thickness (t) (or substantially the same thickness), and the thickness of the taper portion P23 may have the same thickness (or substantially the same thickness) as the entire region of the third via portion P3.

Because the thickness of the taper portion P23 corresponds (or substantially corresponds) to the thickness of the entire region of the third via portion P3, it may have a uniform (or substantially uniform) distribution because of the increased flow rate of the insulator in a thickness direction (z-axis direction), and the insulator may have a uniform (or substantially uniform) distribution in the width direction (x-axis direction) of the outlet 40.

FIG. 7 shows a partial perspective view of a device for coating electrode tab insulator according to a first embodiment during a process of coating an insulator on an electrode member tab. Referring to FIG. 7, the electrode assembly 2 of the rechargeable battery may be formed by arranging a negative electrode 102 and a positive electrode 103 on respective surfaces of the separator 101 with the separator 101 between the negative electrode 102 and the positive electrode 103.

The positive electrode 103 may include a coated portion obtained by coating a positive active material on a positive electrode member, and a positive electrode member tab 104 of an uncoated region in which no positive active material is coated. The positive electrode member tab 104 includes an insulating portion 105 formed by coating the insulator utilizing the insulator coating device according to a first embodiment. The coated insulating portion 105 may be configured to prevent a short-circuit of the positive electrode member tab 104 and the negative electrode 103.

The insulator is coated with a uniform (or substantially uniform) distribution by the insulator coating device according to a first embodiment so the insulating portion 105 may have a uniform (or substantially uniform) coating width and thickness. In one or more embodiments, the coating width (W) may have the width (W) of the outlet 40, and the width of the outlet 40 may be approximately 2.8 mm ± 0.3 mm. The thickness of the insulating portion 105 may be approximately 5 µm ± 3 µm.

When the electrode assembly 2 with the insulating portion 105 underwent a heat exposure estimation test at 130°C, an insufficient insulation phenomenon was not generated by the insulating portion 105. No electrical short-circuit was generated around the positive electrode member tab 104 having the insulating portion 105. Hence, the insulation property was found to be increased.

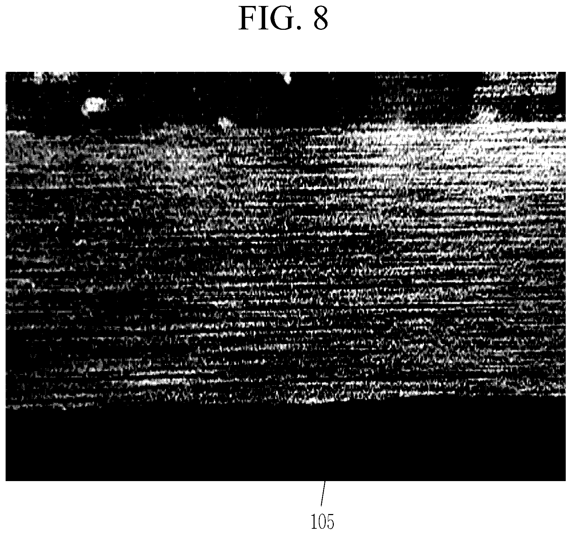

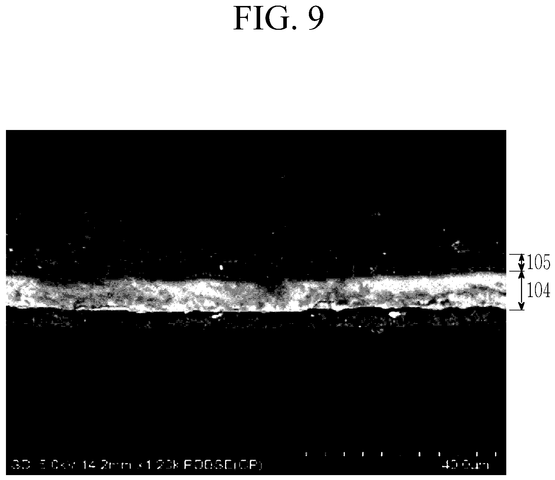

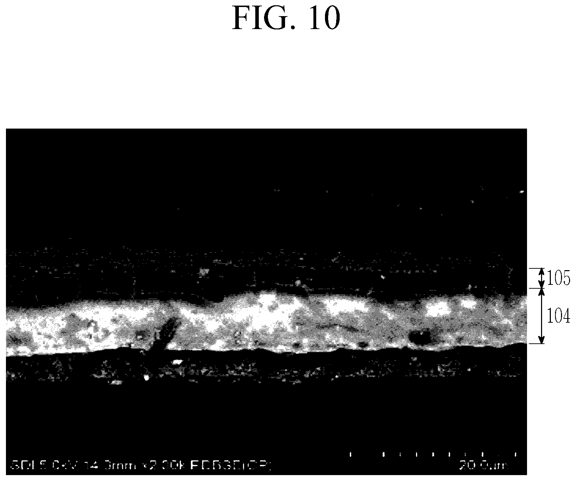

FIG. 8 shows an actual image of an insulating portion of FIG. 7, FIG. 9 shows a cross-sectional image with respect to a line IX-IX of FIG. 8, and FIG. 10 shows a cross-sectional image with respect to a line X-X of FIG. 8.

Referring to FIG. 8 to FIG. 10, as shown in a surface image of the insulating portion 105 and a cross-sectional image from which two portions are cut, it was found that the insulator was uniformly (or substantially uniformly) applied and the insulating portion 105 has a uniform (or substantially uniform) thickness.

A second embodiment will now be described. The same constituent elements as those in a first embodiment will be omitted, and different ones will be described.

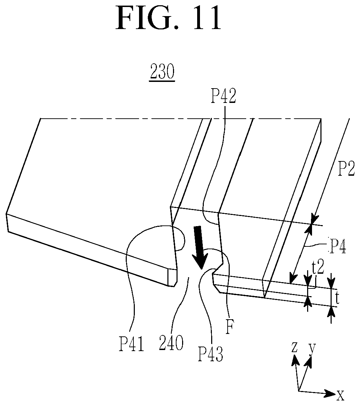

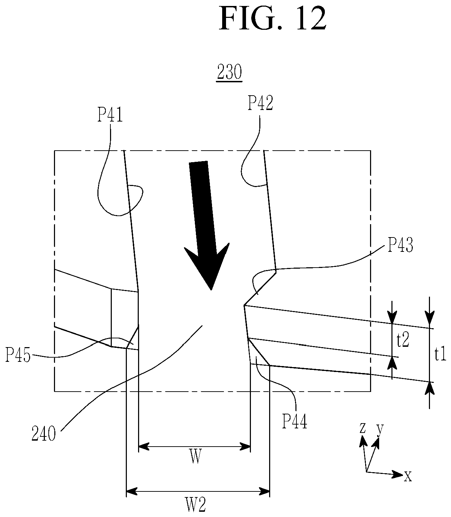

FIG. 11 shows a partial perspective view of a shim member 230 of a device for coating an electrode tab insulator according to a second embodiment, and FIG. 12 shows a partial perspective view of a flow state of an insulator in the shim member 230 of FIG. 11.

Referring to FIG. 11 and FIG. 12, regarding the shim member 230 of the insulator coating device according to a second embodiment, the thickness (t2) of the taper portion P43 on the second side P42 may be less than the thickness (t) of another portion of the third via portion P4.

In one or more embodiments, the taper portion P43 on the second side P42 may form a chamfer P44 on one side in the thickness direction. The first side P41 may form a chamfer P45 on one side in the thickness direction. Therefore, the third via portion P4 may form a chamfer P44 on one side in the thickness direction on the taper portion P43 on the second side P42 and may further increase the width (W) of the outlet 240. The third via portion P4 may form a chamfer P45 on one side of the first side P41 in the thickness direction to further increase the width (W) of the outlet 240.

The shim member 230 may have a portion that has the same thickness (t) (or substantially the same thickness) as the first embodiment and a portion that has a different thickness (t2) on the third via portion P4. The taper portion P43 of the second side P42 may have a portion in which the thickness (t2) is variable due to the chamfer P44. The first side P41 may have a portion of which the thickness (t2) is variable due to the chamfer P45.

The twenty-first and twenty-second sides P21 and P22 of the third via portion P3 may have the same width (W) as the outlet 40 according to a first embodiment on the portion that has no chamfers P44 and P45, and may have the width W2 that is increased to be greater than the width (W) on the portion that has the chamfers P44 and P45.

Therefore, the taper portion P43 may discharge the same increased flow rate of the insulator as the first embodiment on the portion that has no chamfers P44 and P45. However, the taper portion P43 that has the chamfers P44 and P45 may reduce the flow rate of the insulator compared to the flow rate of the insulator of the outlet 40 according to a first embodiment per width (W).

In this manner, the excessive ratio of the flow rate of the insulator per width (W) may be prevented from being discharged from the outlet 240 in the width direction (x-axis direction). Hence, the insulator may be uniformly (or substantially uniformly) provided in the width direction (x-axis direction) of the outlet 240.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

**Description of symbols**

| | | | |
|---|---|---|---|
| 2: | electrode assembly | 10: | top die |
| 11: | inlet | 20: | bottom die |
| 30: | shim member | 40: | outlet |
| 101: | separator | 102: | negative electrode |
| 103: | positive electrode | 104: | positive electrode member tab |
| 105: | insulating portion | 230: | shim member |
| 240: | outlet | CL: | centerline |
| t: | thickness | t2: | thickness |
| P: | passage | P1: | first via portion |
| P2: | second via portion | P3: | third via portion |
| P4: | third via portion | P11: | eleventh side |
| P12: | twelfth side | P21: | twenty-first side |
| P22: | twenty-second side | P23: | taper portion |
| P41: | first side | P42: | second side |
| P43: | taper portion | P44: | chamfer |
| P45: | chamfer | W: | width |
| θ1: | first angle | θ2: | second angle |
| θ3: | third angle | θ11: | eleventh angle |
| θ12: | twelfth angle | θ21: | twenty-first angle |
| θ22: | twenty-second angle | | |

## Claims

1. A device for coating an electrode tab insulator, the device comprising:
a top die comprising an inlet configured to receive an insulator;
a bottom die on a lower side of the top die, the bottom die being coupled to the top die; and
a shim member having a thickness (t) between the top die and the bottom die, the shim member comprising an outlet connected to the inlet and forming a passage in which the insulator is configured to flow in a width direction of the outlet.

2. The device as claimed in claim 1, wherein a width, a height, and a length of the passage form a volume in which the insulator is configured to flow.

3. The device as claimed in claim 1 or claim 2, wherein the shim member forms a width (W) of the outlet.

4. The device as claimed in any preceding claim, wherein the passage comprises:
a first via portion connected to the inlet, the first via portion comprising an eleventh side oriented at an eleventh angle θ11 and a twelfth side oriented at a twelfth angle θ12 that is greater than the eleventh angle θ11 with respect to the width direction,
a second via portion connected to the first via portion, and
a third via portion connected to the second via portion and to the outlet, the third via portion comprising a twenty-first side oriented a twenty-first angle θ21 and a twenty-second side oriented a twenty-second angle θ22 that is greater than the twenty-first angle θ21 with respect to the width direction.

5. The device as claimed in claim 4, wherein:
the eleventh angle θ11 is less than the twenty-first angle θ21, and
the twelfth angle θ12 is less than the twenty-second angle θ22.

6. The device as claimed in claim 4 or claim 5, wherein:
the third via portion further comprises a taper portion on the twenty-second side facing the twenty-first side in the width direction,
the twenty-first side extends to the outlet with the twenty-first angle θ21,
the twenty-second side extends with the twenty-second angle, and
the taper portion extends with a third angle θ3 toward the twenty-first side.

7. The device as claimed in claim 6, wherein a thickness of the taper portion on the twenty-second side is
(A) substantially equal to a thickness of an entire region of the third via portion; or
(B) less than a thickness of another portion of the third via portion.

8. The device as claimed in claim 6 or claim 7, wherein the taper portion on the twenty-second side forms a chamfer on one side in a thickness direction.

9. The device as claimed in any of claims 4 to 8, wherein the twenty-first side forms a chamfer on one side in the thickness direction.

10. The device as claimed in any of claims 1 to 3, wherein the passage comprises:
a first via portion connected to the inlet, the first via portion being oriented at a first angle θ1 along a centerline with respect to the width direction, the first via portion having a width that is gradually reduced,
a second via portion connected to the first via portion, the second via portion having a predetermined width, and
a third via portion connected to the second via portion and to the outlet, the third via portion being oriented at a second angle θ2 along a centerline with respect to the width direction.

11. The device as claimed in claim 10, wherein the first angle θ1 is less than the second angle θ2.

12. The device as claimed in any of claims 1 to 3, wherein the passage comprises:
a first via portion extending from the inlet toward the outlet in an inclined manner, wherein a width of the first via portion reduces in a direction toward the outlet,
a second via portion connected to the first via portion, the second via portion extending toward the outlet in an orthogonal manner, a width of the second via portion being substantially constant, and
a third via portion connected to the second via portion, the third via portion extending to the outlet in an inclined manner, wherein a width of the third via portion reduces in a direction toward the outlet.

13. The device as claimed in claim 12, wherein the third via portion further comprises a taper portion extending to the outlet, and wherein a width of the third via portion decreases.

14. The device as claimed in claim 13, wherein the third via portion comprises a chamfer on one side in a thickness direction on the taper portion on a second side, the chamfer increasing the width of the outlet.

15. The device as claimed in any of claims 12 to 14, wherein the third via portion comprises a chamfer on one side of a first side in the thickness direction, the chamfer increasing the width of the outlet.
